# EUROPEAN PATENT APPLICATION

(11) **EP 4 794 419 A1**
(43) Date of publication of application: **19.08.2026**
(21) Application number: 24877289.9
(22) Date of filing: 11.10.2024
(51) Int. Cl.: H04W 72/0457, H04B 7/022, H04W 52/02

(54) **WIRELESS BASE STATION**

(30) Priority: 11.10.2023 JP 2023175985
(71) Applicant: NTT DoCoMo, Inc., Tokyo 100-6150 (JP)
(72) Inventor: MIN, Tianyang, Tokyo 100-6150 (JP); INOUE, Shoki, Tokyo 100-6150 (JP)
(74) Representative: Hoffmann Eitle
(86) International application number: PCT/JP2024/036474
(87) International publication number: WO 2025/079695

(57) **Abstract**

A radio base station executes radio communication with a terminal via a secondary cell, and configures a priority for the secondary cell when configuring a candidate for the secondary cell. The radio base station configures the priority based on at least one of an energy consumption cost of the secondary cell, required communication quality, and a capability of the terminal.

## Description

### TECHNICAL FIELD

The present disclosure relates to a radio base station contributing to reduction of energy consumption of a network.

### BACKGROUND ART

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

For example, in 3GPP Release 18, a technology (NES: Network Energy Saving) for reducing energy consumption of a network including a radio base station (gNB) has been studied (Non-Patent Literature 1). Specifically, transitioning a cell formed by a gNB to a sleep state, or applying DTX/DRX (Discontinuous Transmission/Discontinuous Reception) in which transmission and reception by the gNB are intermittently executed has been studied (Non-Patent Literature 2, 3).

### CITATION LIST

### NON-PATENT LITERATURE

Non-Patent Literature 1: "New WID: Network energy savings for NR", RP-223540, 3GPP TSG RAN Meeting #98-e, 3GPP, December 2022
Non-Patent Literature 2: "Report of 3GPP TSG RAN WG2 meeting #123, Toulouse, France", 3GPP, August 2023
Non-Patent Literature 3: "Status Report to TSG", RP-231926, 3GPP TSG RAN meeting #101, 3GPP, September 2023

### SUMMARY OF INVENTION

By the way, an existing change of a secondary cell (SCell) (SCell change) is executed by transmitting an SCell addition or an SCell release from a gNB to a terminal (User Equipment, UE) by RRC signaling based on a measurement report from the UE. That is, the UE cannot autonomously change the SCell.

Also, when autonomously adding or changing an SCell, the UE makes a determination based only on cell quality. Furthermore, when executing conditional handover (CHO), conditional PSCell addition change (CPAC), or Lower layer Triggered Mobility (LTM), the UE monitors only quality of a candidate target cell to determine execution. That is, there is a problem that the addition or change of a cell cannot be autonomously performed in consideration of factors such as a congestion degree of the SCell and an NES cell.

Therefore, the following disclosure has been made in view of such a situation, and an object thereof is to provide a radio base station capable of realizing appropriate addition or change of a cell even when a technology (NES) for reducing energy consumption of a network is introduced.

An aspect of the present disclosure is a terminal (UE 200) including a control unit (control unit 270) that controls a cell transition of the terminal according to mobility control by a lower layer, and a reception unit (control signal/reference signal processing unit 240) that receives a message including an execution condition of the cell transition from a network, wherein the control unit executes the cell transition when an execution condition for a dormant state applied when a source cell of a transition source or a candidate cell of a transition destination shifts to a dormant state is satisfied.

An aspect of the present disclosure is a radio base station (gNB 100) including a reception unit (control signal/reference signal processing unit 240) that receives a measurement report from a terminal (UE 200), and a control unit (control unit 270) that configures, to the terminal, candidates for a plurality of secondary cells autonomously selectable by the terminal based on the measurement report.

An aspect of the present disclosure is a terminal (UE 200) including a reception unit (control signal/reference signal processing unit 240) that receives signaling of a lower layer indicating that a secondary cell shifts to a dormant state associated with reduction of energy consumption, and a control unit (control unit 270) that releases or deactivates the secondary cell when receiving the signaling.

An aspect of the present disclosure is a radio base station (gNB 100) including a communication unit (radio signal transmission/reception unit 210) that executes radio communication with a terminal via a secondary cell, and a control unit (control unit 270) that configures a priority for the secondary cell when configuring a candidate for the secondary cell, wherein the control unit configures the priority based on at least one of an energy consumption cost of the secondary cell, required communication quality, and a capability of the terminal.

### BRIEF DESCRIPTION OF DRAWINGS

[Fig. 1] Fig. 1 is an overall schematic configuration diagram of a radio communication system 10.
[Fig. 2] Fig. 2 is a diagram showing a configuration example of a radio frame, a subframe, and a slot used in the radio communication system 10.
[Fig. 3] Fig. 3 is a functional block configuration diagram of a gNB 100 and a UE 200.
[Fig. 4] Fig. 4 is a diagram showing a configuration example of a primary cell and a secondary cell.
[Fig. 5] Fig. 5 is a diagram showing a configuring sequence example of an SCell according to Operation Example 1.
[Fig. 6] Fig. 6 is a diagram showing a configuring sequence example of an SCell according to Operation Example 2.
[Fig. 7] Fig. 7 is a diagram showing an example of a hardware configuration of the gNB 100 and the UE 200.
[Fig. 8] Fig. 8 is a diagram showing a configuration example of a vehicle 2001.

### DESCRIPTION OF EMBODIMENTS

Hereinafter, embodiments will be described based on the drawings. Note that the same functions and configurations are denoted by the same or similar reference signs, and description thereof will be omitted as appropriate.

### (1) Overall Schematic Configuration of Radio Communication System

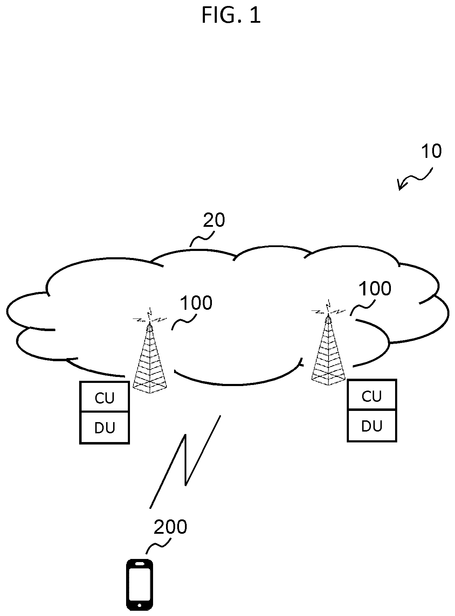

Fig. 1 is an overall schematic configuration diagram of a radio communication system 10 according to the present embodiment. The radio communication system 10 is a radio communication system according to 5G New Radio (NR), and includes a Next Generation-Radio Access Network 20 (hereinafter, NG-RAN 20) and a terminal 200 (User Equipment 200, hereinafter, UE 200).

Note that the radio communication system 10 may be a radio communication system according to a scheme called Beyond 5G, 5G Evolution, or 6G, or may include a radio communication system according to a scheme called Long Term Evolution (LTE) or 4G. The radio communication system 10 may support functions related to Industrial Internet of Things (IIoT) and URLLC (Ultra-Reliable and Low Latency Communications).

The NG-RAN 20 includes a radio base station 100 (hereinafter, gNB 100). Note that a specific configuration of the radio communication system 10 including the numbers of gNBs (which may be eNBs or the like) and UEs is not limited to the example shown in Fig. 1.

Also, the gNB 100 may adopt a fronthaul (FH) interface defined by O-RAN (Open Radio Access Network Alliance). The gNB 100 may include an O-DU (O-RAN Distributed Unit) and an O-RU (O-RAN Radio Unit). The gNB 100 can function as a type of NG-RAN node.

The NG-RAN 20 actually includes a plurality of NG-RAN Nodes, specifically, gNBs (or ng-eNBs), and is connected to a core network according to 5G (5GC, not shown). The NG-RAN 20 and the 5GC may be simply expressed as a "network". In the 5GC, a concept of CUPS (Control and User Plane Separation) in which functions of a user plane and a control plane are clearly separated may be introduced.

The gNB 100 is a radio base station according to NR, and executes radio communication according to NR with the UE 200. Note that the gNB 100 may be configured to include a CU (Central Unit) and a DU (Distributed Unit), and the DU may be separated from the CU and installed in a geographically different location. One or a plurality of DUs may be connected to the CU. Also, gNBs 100 (gNB-CUs) may be connected by an Xn interface, and the CU and the DU may be connected by an F1 interface (F1-AP or the like).

The gNB 100 and the UE 200 can support Massive MIMO that generates a beam with higher directivity by controlling radio signals transmitted from a plurality of antenna elements, carrier aggregation (CA) that bundles and uses a plurality of component carriers (CCs), dual connectivity (DC) that simultaneously performs communication between the UE and each of two NG-RAN Nodes, and the like.

The type of DC may be Multi-RAT Dual Connectivity (MR-DC) utilizing a plurality of radio access technologies, or NR-NR Dual Connectivity (NR-DC) utilizing only NR. For example, any gNB may constitute a master node (MN), and one or a plurality of other gNBs may constitute a secondary node (SN).

Also, the radio communication system 10 may support a plurality of frequency ranges (FRs) shown below.

- FR1: 410 MHz to 7.125 GHz
- FR2-1: 24.25 GHz to 52.6 GHz
In FR1, Sub-Carrier Spacing (SCS) of 15, 30, or 60 kHz is used, and a bandwidth (BW) of 5 to 100 MHz may be used. FR2-1 is a higher frequency than FR1, SCS of 60 or 120 kHz (240 kHz may be included) is used, and a bandwidth (BW) of 50 to 400 MHz may be used.

Note that SCS may be interpreted as Numerology. Numerology is defined in 3GPP TS38.300 and corresponds to one subcarrier spacing in a frequency domain.

Furthermore, the radio communication system 10 also supports a higher frequency band than the frequency band of FR2-1. Specifically, the radio communication system 10 supports a frequency band exceeding 52.6 GHz and up to 71 GHz. Such a high frequency band may be referred to as FR2-2.

When utilizing a band exceeding 52.6 GHz, Cyclic Prefix-Orthogonal Frequency Division Multiplexing (CP-OFDM)/Discrete Fourier Transform - Spread (DFT-S-OFDM) having a larger Sub-Carrier Spacing (SCS) may be applied.

Also, in a high frequency band such as FR2-2, as described above, an increase in phase noise between carriers becomes a problem. For this reason, application of a larger (wider) SCS or a single carrier waveform may be required.

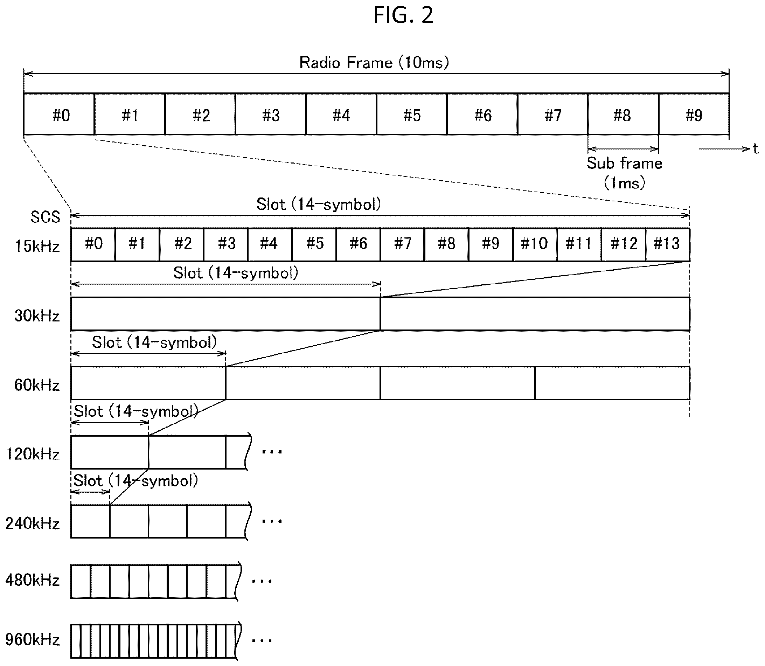

The larger the SCS, the shorter a symbol/CP (Cyclic Prefix) period and a slot period (when a configuration of 14 symbols/slot is maintained). Fig. 2 shows a configuration example of a radio frame, a subframe, and a slot used in the radio communication system 10.

When the configuration of 14 symbols/slot is maintained, the larger (wider) the SCS, the shorter the symbol period (and the slot period). Note that the symbol period may be referred to as a symbol length, a time direction, a time domain, or the like. Also, a frequency direction may be referred to as a frequency domain, a resource block, a subcarrier, a BWP (Bandwidth part), or the like.

Frequency resources may include a component carrier (CC), a subcarrier, a resource block (RB), a resource block group (RBG), a BWP (Bandwidth part), and the like. Time resources may include a symbol, a slot, a mini slot, a subframe, a radio frame, a DRX (Discontinuous Reception) cycle, and the like.

Note that the number of symbols constituting one slot does not necessarily have to be 14 symbols (for example, 28, 56 symbols). Also, the number of slots per subframe may differ depending on the SCS.

Also, in the radio communication system 10, conditional handover (CHO) may be supported. In CHO, a candidate cell for handover and an execution condition for handover (which may be referred to as transition) to the candidate cell are configured in advance for the UE 200.

Thereby, the UE 200 enables handover to a target radio base station (which may be referred to as a target cell) without waiting for a handover instruction from the network.

CHO may be interpreted as handover executed by the UE 200 when one or more execution conditions are satisfied. Upon receiving a CHO configuration, the UE 200 may start evaluation of the execution condition, and when handover (legacy handover or conditional handover) is executed, the UE 200 may stop the evaluation of the execution condition.

A candidate gNB or a potential target gNB may provide the CHO configuration to the UE 200. A source gNB may provide an execution condition such as timing to trigger CHO to the UE 200. The execution condition may be configured by one or two or more trigger conditions.

Also, for evaluation of the CHO execution condition of the candidate cell, two or more different triggers, for example, RSRP (Reference Signal Received Power), RSRQ (Reference Signal Received Quality), SINR (Signal-to-Interference plus Noise power Ratio), and the like may be simultaneously configured.

Note that when CHO is configured in the UE 200 and the UE 200 receives another handover (HO) command from the gNB before the CHO execution condition is satisfied, the UE 200 may trigger handover based on the received HO command and does not have to wait for the CHO condition to be satisfied. That is, a legacy HO configuration may be prioritized over the CHO configuration (if configured).

Also, in the radio communication system 10, in addition to mobility management (which may be referred to as L3 Mobility) of the UE 200 by a layer 3 (for example, a radio resource control layer (RRC) may be included), mobility management (which may be referred to as LTM or L1/L2 mobility) in a layer 1/layer 2 (for example, a medium access control layer (MAC) may be included) may be applied.

L3 Mobility may be interpreted as mobility control in the radio resource control layer (RRC). On the other hand, LTM may be interpreted as mobility control in a physical layer (PHY), a medium access control layer (MAC), a radio link control layer (RLC), and a packet data convergence protocol layer (PDCP).

Also, in UE-led LTM (UE based LTM), like conditional handover (CHO), after receiving a specific execution condition from the radio base station (gNB), the UE may monitor a state according to the execution condition, and when the execution condition is satisfied, the UE may execute LTM.

Mobility of the UE 200 may mean ease of movement and mobility of the UE 200 in a broad sense, but in the present embodiment, it may mean minimization of call loss (call drop), radio link (including beam) failure, unnecessary handover, ping-pong state, and the like.

In the radio communication system 10, an SS/PBCH Block (SSB) configured by a Synchronization Signal (SS) and a Physical Broadcast CHannel (PBCH) may be used.

The SSB is transmitted periodically from the network mainly for the UE 200 to execute detection of a cell ID and reception timing at the start of communication. In NR, the SSB is also diverted to reception quality measurement of each cell. As a transmission periodicity of the SSB, 5, 10, 20, 40, 80, 160 milliseconds or the like may be specified. Note that the UE 200 in initial access may assume a transmission periodicity of 20 milliseconds.

The UE 200 transmits a measurement report including reception quality relating to cells including a serving cell and a neighboring cell to the network. A procedure in which the UE 200 transmits the measurement report may be referred to as Measurement reporting. The reception quality relating to the cell may include reception quality of a beam from the cell, or may include reception quality of the cell based on the beam from the cell.

The UE 200 may periodically execute Measurement reporting. The UE 200 may execute Measurement reporting for each event. An entering condition for starting Measurement reporting and a leaving condition for terminating Measurement reporting may be defined for each event. Existing events may include events shown below (see 3GPP TS38.331).

### (i) Event A1

Event A1 is an event in which reception quality of the serving cell becomes better than a threshold. For example, the entering condition is Ms - Hys > Thresh, and the leaving condition is Ms + Hys < Thresh.

Here, Ms is the reception quality of the serving cell, Hys is a hysteresis parameter, and Thresh is a threshold.

### (ii) Event A2

Event A2 is an event in which the reception quality of the serving cell becomes worse than a threshold. For example, the entering condition is Ms + Hys < Thresh, and the leaving condition is Ms - Hys > Thresh.

Here, Ms is the reception quality of the serving cell, Hys is a hysteresis parameter, and Thresh is a threshold.

### (iii) Event A3

Event A3 is an event in which reception quality of the neighboring cell becomes better than the reception quality of the serving cell by an offset. For example, the entering condition is Mn + Ofn + Ocn - Hys > Mp + Ofp + Ocp + Off, and the leaving condition is Mn + Ofn + Ocn + Hys < Mp + Ofp + Ocp + Off.

Here, Mn is the reception quality of the neighboring cell, Ofn is an offset specific to a measurement object, and Ocn is an offset specific to the cell. Mp is the reception quality of the serving cell, Ofp is an offset specific to a measurement object, and Ocp is an offset specific to the cell. Hys is a hysteresis parameter, and Off is a parameter used in Event A3.

### (iv) Event A4

Event A4 is an event in which the reception quality of the neighboring cell becomes better than a threshold. For example, the entering condition is Mn + Ofn + Ocn - Hys > Thresh, and the leaving condition is Mn + Ofn + Ocn + Hys < Thresh.

Here, Mn is the reception quality of the neighboring cell, Ofn is an offset specific to a measurement object, and Ocn is an offset specific to the cell. Hys is a hysteresis parameter, and Thresh is a threshold.

### (v) Event A5

Event A5 is an event in which the reception quality of the serving cell becomes worse than a threshold and the reception quality of the neighboring cell becomes better than a threshold. For example, the entering condition is Mp + Hys < Thresh1, and Mn + Ofn + Ocn - Hys > Thresh2, and the leaving condition is Mp - Hys > Thresh1, and Mn + Ofn + Ocn + Hys < Thresh2.

Here, Ms is the reception quality of the serving cell, Hys is a hysteresis parameter, and Thresh1 is a threshold. Mn is the reception quality of the neighboring cell, Ofn is an offset specific to a measurement object, and Ocn is an offset specific to the cell. Hys is a hysteresis parameter, and Thresh2 is a threshold.

### (vi) Event A6

Event A6 is an event in which the reception quality of the neighboring cell becomes better than reception quality of an SCell (Secondary Cell) by an offset. For example, the entering condition is Mn + Ocn - Hys > Ms + Ocs + Off, and the leaving condition is Mn + Ocn + Hys < Ms + Ocs + Off.

Note that in addition to the events described above, events relating to inter-RAT (Radio Access technology) (for example, B1 (Inter RAT neighbour becomes better than threshold), B2 (Serving becomes worse than threshold1 and inter RAT neighbour becomes better than threshold2)) may be included.

Here, Mn is the reception quality of the neighboring cell, and Ocn is an offset specific to the cell. Ms is the reception quality of the SCell, and Ocs is an offset specific to the cell. Hys is a hysteresis parameter, and Off is a parameter used in Event A6.

Also, in the radio communication system 10, a technology for reducing energy consumption of a network including a gNB (NES: Network Energy Saving) may be introduced. A reduction method of energy consumption by NES is not particularly limited, but typically, transition of a cell to a sleep state, transitioning a cell formed by the gNB 100 to a sleep state, DTX/DRX (Discontinuous Transmission/Discontinuous Reception) in which transmission and reception by the gNB 100 are intermittently executed, and the like may be included.

The sleep state of the cell may mean that at least one of downlink (DL) transmission and uplink (UL) reception is not executed for a certain period and enters a dormant state. Also, it may be interpreted that in a DTX state, DL transmission by the gNB 100 is discontinuously executed at a certain interval, and in a DRX state, UL reception by the gNB 100 is discontinuously executed at a certain interval. DTX/DRX may be activated or deactivated by Downlink Control Information (DCI).

It may be interpreted as a dormant state of a cell including a sleep state of a cell and a DTX/DRX state. Also, NES may be applied in the case of CHO and LTM.

### (2) Functional Block Configuration of Radio Communication System

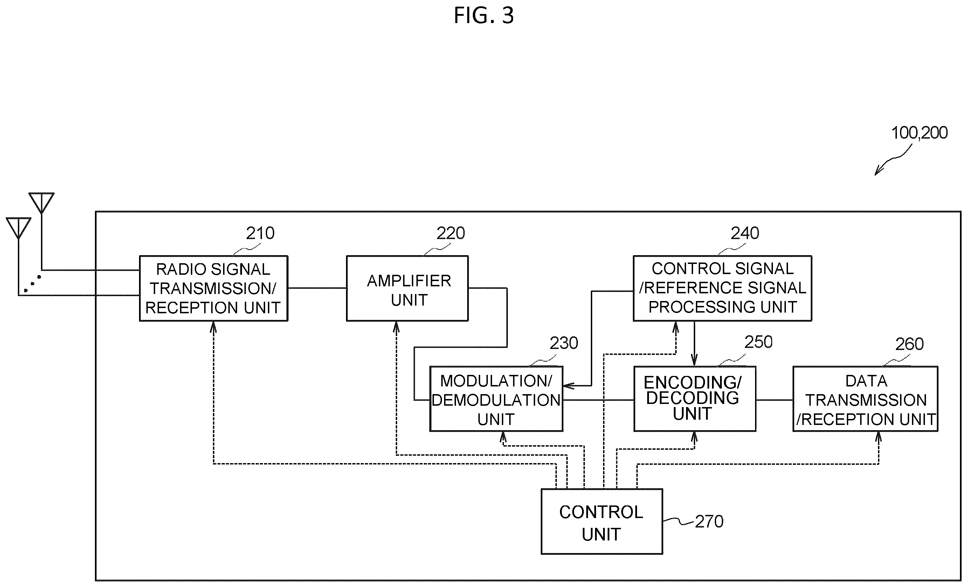

Next, a functional block configuration of the radio communication system 10 will be described. Specifically, a functional block configuration of the UE 200 will be described. Fig. 3 is a functional block configuration diagram of the gNB 100 and the UE 200.

As shown in Fig. 3, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

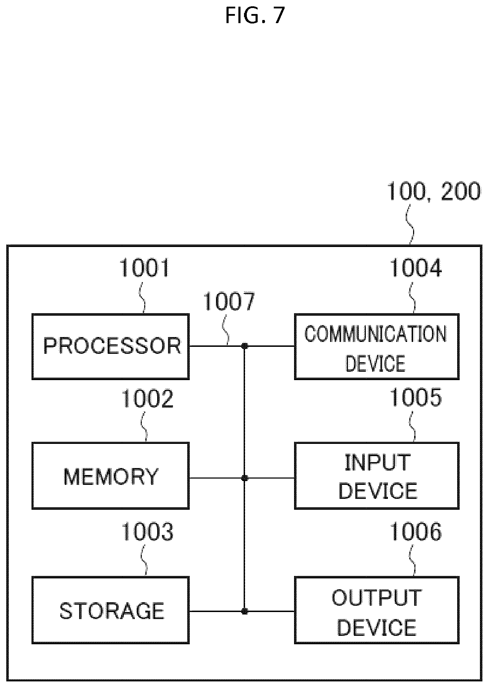

Note that in Fig. 3, only main functional blocks related to the description of the embodiment are shown, and it should be noted that the UE 200 (gNB 100) has other functional blocks (for example, a power supply unit and the like). Also, Fig. 3 shows a functional block configuration of the UE 200, and for a hardware configuration, refer to Fig. 7.

The radio signal transmission/reception unit 210 transmits and receives radio signals according to NR. The radio signal transmission/reception unit 210 can support Massive MIMO that generates a beam with higher directivity by controlling radio (RF) signals transmitted from a plurality of antenna elements, carrier aggregation (CA) that bundles and uses a plurality of component carriers (CCs), dual connectivity (DC) that simultaneously performs communication between the UE and each of two NG-RAN Nodes, and the like.

The amplifier unit 220 is configured by a PA (Power Amplifier)/LNA (Low Noise Amplifier) or the like. The amplifier unit 220 amplifies a signal output from the modulation/demodulation unit 230 to a predetermined power level. Also, the amplifier unit 220 amplifies an RF signal output from the radio signal transmission/reception unit 210.

The modulation/demodulation unit 230 executes data modulation/demodulation, transmission power setting, resource block allocation, and the like for each predetermined communication destination (gNB 100 or the like). In the modulation/demodulation unit 230, Cyclic Prefix-Orthogonal Frequency Division Multiplexing (CP-OFDM)/Discrete Fourier Transform - Spread (DFT-S-OFDM) may be applied. Also, DFT-S-OFDM may be used not only for uplink (UL) but also for downlink (DL).

The control signal/reference signal processing unit 240 executes processing relating to various control signals transmitted and received by the UE 200, and processing relating to various reference signals transmitted and received by the UE 200.

Specifically, the control signal/reference signal processing unit 240 receives various control signals transmitted from the gNB 100 via a predetermined control channel, for example, control signals of a radio resource control layer (RRC). Also, the control signal/reference signal processing unit 240 transmits various control signals toward the gNB 100 via a predetermined control channel.

The control signal/reference signal processing unit 240 executes processing using reference signals (RS) such as a Demodulation Reference Signal (DMRS) and a Tracking Reference Signal (TRS).

The DMRS is a reference signal (pilot signal) known between a terminal-specific base station and a terminal for estimating a fading channel used for data demodulation. The TRS is a reference signal used when tracking time and frequency fluctuations in downlink.

Note that the reference signals may include a Channel State Information-Reference Signal (CSI-RS), a Sounding Reference Signal (SRS), a Positioning Reference Signal (PRS) for position information, and the like, in addition to the DMRS and the TRS.

Also, the channel includes a control channel and a data channel. The control channel may include a PDCCH (Physical Downlink Control Channel), a PUCCH (Physical Uplink Control Channel), a RACH (Downlink Control Information (DCI) including a Random Access Channel, a Random Access Radio Network Temporary Identifier (RA-RNTI)), a Physical Broadcast Channel (PBCH), and the like.

Also, the data channel includes a PDSCH (Physical Downlink Shared Channel), a PUSCH (Physical Uplink Shared Channel), and the like. Data may mean data transmitted via the data channel.

Also, the control signal/reference signal processing unit 240 may execute processing relating to transmission and reception of messages and commands relating to CHO, LTM, and NES. Specifically, the control signal/reference signal processing unit 240 may receive a message including an execution condition of cell transition (handover) according to LTM from the network. In the present embodiment, the control signal/reference signal processing unit 240 may constitute a reception unit.

More specifically, the control signal/reference signal processing unit 240 may receive RRC Reconfiguration including at least one of an execution condition associated with non-application of NES (which may be referred to as a normal LTM execution condition) and an execution condition associated with application of NES (which may be referred to as an NES execution condition) from the network (gNB 100).

The NES execution condition may be interpreted as an execution condition for a dormant state applied when a source cell of a transition source or a candidate cell of a transition destination shifts to a dormant state according to NES. The control signal/reference signal processing unit 240 can receive a message including such an execution condition for a dormant state.

The control signal/reference signal processing unit 240 may receive a message of a lower layer indicating transition of a cell (gNB 100) to a dormant state according to NES. For example, the control signal/reference signal processing unit 240 may receive signaling of layer 1 (DCI may be included) or a MAC-CE (Control Element) indicating that a source cell (a target cell may be included) shifts to the dormant state.

Also, the control signal/reference signal processing unit 240 may receive a cell switch command including information indicating transition to the dormant state. Specifically, the control signal/reference signal processing unit 240 may receive a Cell switch command including an NES mode activation trigger from the gNB 100. In this case, the control signal/reference signal processing unit 240 may report to the gNB 100 that a trigger condition (which may be interpreted as an event) of L1 measurement according to NES is satisfied by L1 measurement reporting in advance.

The control signal/reference signal processing unit 240 can receive RRC Reconfiguration including configuration of a candidate cell (which may include a cell subject to NES). In this case, considering that a cell subject to NES is included, regarding an information element (IE) configuring the RRC Reconfiguration, an information element (additional information element) indicating whether or not the candidate cell is in a dormant state may be included separately from an information element indicating configuration of the candidate cell (Candidate target cell config). The control signal/reference signal processing unit 240 may receive RRC Reconfiguration including such an additional information element (NES cell or Non-NES cell) indicating whether or not the candidate cell is in a dormant state.

The control signal/reference signal processing unit 240 may receive a transmission request for terminal information (UEInformationRequest) from the network. Also, the control signal/reference signal processing unit 240 may transmit terminal information (UEInformationResponse) including information regarding a cell to the network based on a state of a radio link and handover in a cell in a dormant state according to NES (which may be referred to as an NES cell). In the present embodiment, the control signal/reference signal processing unit 240 may constitute a transmission unit.

Specifically, the control signal/reference signal processing unit 240 may transmit UEInformationResponse indicating a state of the NES cell when radio link failure (RLF) or handover failure (HOF) occurs to the gNB 100.

More specifically, when a failure of a radio link (RLF) occurs, the transmission unit may transmit UEInformationResponse including at least one of an indication indicating that the cell is in a dormant state, a type of the dormant state, identification information of the cell, a format of discontinuous transmission/discontinuous reception (DTX/DRX) of the cell, position information of the terminal, and occurrence time information of the failure. Note that the occurrence time of the failure may be a time when the UE 200 detected the RLF, or may include duration of the RLF, recovery time of the RLF, and the like.

Also, when handover fails (HOF), the control signal/reference signal processing unit 240 may transmit UEInformationResponse including at least one of identification information of a source cell of a handover source, identification information of a target cell of a handover destination, reception quality of the source cell (RSRP, RSRQ, SINR), reception quality of the target cell, an indication indicating that the source cell is in a dormant state, an indication indicating that the target cell is in a dormant state, an indication indicating that a candidate cell of the handover destination is in a dormant state, a format of discontinuous transmission/discontinuous reception (DTX/DRX) of the source cell, a format of discontinuous transmission/discontinuous reception of the target cell, position information of the UE 200, and occurrence time information of the failure.

When transmitting such UEInformationResponse, the control signal/reference signal processing unit 240 may include at least one of an offset and a hysteresis parameter for measurement associated with the dormant state. That is, the control signal/reference signal processing unit 240 may transmit UEInformationResponse including an offset and a hysteresis parameter applied at the time of NES as the offset (O) and the hysteresis parameter (Hys) applied to the event of Measurement reporting described above.

Note that the network can configure Measurement reporting for causing the UE to report measurement results (Measurement results) for each SS/PBCH Block. The network may configure Measurement reporting for causing the UE to report Measurement results for each SS/PBCH Block(s), or may configure Measurement reporting for causing the UE to report Measurement results for each cell based on SS/PBCH Block(s). The network may configure Measurement reporting for causing the UE to report Measurement results for each CSI-RS resource, or may configure Measurement reporting for causing the UE to report Measurement results for each cell based on CSI-RS resources.

Also, the control signal/reference signal processing unit 240 may transmit UEInformationResponse including at least one of identification information of a cell related to cell transition of the UE 200 by CHO or LTM and an indication indicating that the related cell is in a dormant state. Note that LTM may include LTM fast failure recovery. LTM fast failure recovery is a mechanism in which, at the time of failure of LTM, the UE 200 executes cell selection, and when the selected cell is an LTM candidate cell, directly applies configuration of the candidate cell without transmitting RRCReestablishmentRequest to the gNB 100.

Also, when transmitting such UEInformationResponse, the control signal/reference signal processing unit 240 may transmit UEInformationResponse including time from reception of an instruction (NES mode activation trigger) for the cell to transition to a dormant state to start, completion, or failure of handover.

Specifically, the control signal/reference signal processing unit 240 may transmit UEInformationResponse including time required from reception of the NES mode activation trigger from the source cell side to handover success or failure, and time from reception of the NES mode activation trigger from the source cell side to handover execution (regardless of success or failure).

The control signal/reference signal processing unit 240 may transmit capability information of the UE 200 to the network. For example, the control signal/reference signal processing unit 240 can transmit UE Capability Information regarding a trigger condition of a measurement report, support related to NES, and the like to the gNB 100.

Also, the control signal/reference signal processing unit 240 may receive signaling of a lower layer indicating that a secondary cell shifts to a dormant state (NES mode) associated with reduction of energy consumption. In the present embodiment, the control signal/reference signal processing unit 240 may constitute a reception unit that receives signaling of a lower layer.

The encoding/decoding unit 250 executes division/concatenation of data, channel coding/decoding, and the like for each predetermined communication destination (gNB 100 or other gNBs).

Specifically, the encoding/decoding unit 250 divides data output from the data transmission/reception unit 260 into a predetermined size, and executes channel coding on the divided data. Also, the encoding/decoding unit 250 decodes data output from the modulation/demodulation unit 230, and concatenates the decoded data.

The data transmission/reception unit 260 executes transmission and reception of a Protocol Data Unit (PDU) and a Service Data Unit (SDU). Specifically, the data transmission/reception unit 260 executes assembly/disassembly of PDUs/SDUs in a plurality of layers (a medium access control layer (MAC), a radio link control layer (RLC), a packet data convergence protocol layer (PDCP), and the like). Also, the data transmission/reception unit 260 executes error correction and retransmission control of data based on hybrid ARQ (Hybrid automatic repeat request).

The control unit 270 controls each functional block constituting the UE 200. Particularly, in the present embodiment, the control unit 270 executes control regarding CHO, LTM, and NES.

Specifically, the control unit 270 controls cell transition (handover) of the UE 200 according to LTM (mobility control by a lower layer). Also, the control unit 270 controls cell transition (handover) according to conditional handover (CHO). In both LTM and CHO, an execution condition used for determining whether or not to execute cell transition (handover) may be applied.

LTM may be interpreted as cell transition by processing in a lower layer (L1/L2) as described above, and CHO may be interpreted as cell transition by processing in a higher layer (L3).

The control unit 270 may execute cell transition when an execution condition (execution condition for a dormant state) applied when a source cell of a transition source or a candidate cell of a transition destination shifts to a dormant state according to NES is satisfied. The execution condition may be for LTM or for CHO. As described above, a specific measurement offset or hysteresis parameter different from normal LTM (CHO) may be applied to the execution condition.

That is, the control unit 270 may execute cell transition when an execution condition for a dormant state to which at least one of a specific measurement offset and a specific measurement hysteresis parameter associated with a dormant state of a cell by NES (which may include a DTX/DRX state as described above) is applied is satisfied.

The control unit 270 may execute cell transition (handover) according to LTM (or CHO) when the execution condition for a dormant state received by the control signal/reference signal processing unit 240 is satisfied. Note that the execution condition for a dormant state does not necessarily have to be transmitted from the network, and may be configured (pre-configured) in the UE 200 in advance.

Also, the control unit 270 may execute cell transition when the control signal/reference signal processing unit 240 receives a message of a lower layer indicating transition to a dormant state according to NES and satisfies the execution condition for a dormant state. The message of the lower layer may be signaling of layer 1 or a MAC-CE as described above.

Alternatively, the control unit 270 may execute cell transition based on a cell switch command. Specifically, the control unit 270 may execute cell transition based on a Cell switch command including an NES mode activation trigger.

The control unit 270 may refer to an additional information element (NES cell or Non-NES cell) included in configuration of a candidate cell (Candidate target cell config) in order to determine whether or not the cell is in a dormant state according to NES. That is, the control unit 270 may determine whether or not the candidate cell is in a dormant state by referring to the additional information element. If the control unit 270 refers only to the additional information element, the control unit 270 can quickly determine whether or not the candidate cell is in a dormant state without referring to (decoding) the Candidate target cell config.

Also, when the control signal/reference signal processing unit 240 receives signaling of a lower layer indicating that the gNB 100 (or the cell) shifts to an NES mode, the control unit 270 may release or deactivate a secondary cell. When receiving the signaling, the control unit 270 may start monitoring an execution condition for release or change of the secondary cell.

Also, the gNB 100 may include the following functions. Specifically, the gNB 100 may include a control signal/reference signal processing unit 240 (reception unit) that receives a measurement report from the UE 200, and a control unit 270 that configures, to the UE 200, candidates for a plurality of secondary cells autonomously selectable by the UE 200 based on the measurement report.

The control unit 270 of the gNB 100 may configure an execution condition for adding, releasing, or changing a secondary cell.

Also, the gNB 100 may include a radio signal transmission/reception unit 210 (communication unit) that executes radio communication with the UE 200 via a secondary cell, and a control unit 270 that configures a priority for the secondary cell when configuring a candidate for the secondary cell.

The control unit 270 of the gNB 100 may configure the priority based on at least one of an energy consumption cost of the secondary cell, required communication quality, and a capability of the UE 200.

Also, the control unit 270 of the gNB 100 may configure the priority for each candidate for the secondary cell when at least one of conditional handover (CHO), conditional cell change (CPC), and mobility control by a lower layer (LTM) is applied.

Also, the control unit 270 of the gNB 100 may configure the priority based on at least one of a congestion degree and presence/absence of a dormant state of the secondary cell.

### (3) Operation of Radio Communication System

Next, an operation of the radio communication system 10 will be described. Specifically, an operation example related to addition, change, or release of a secondary cell (SCell) when NES is applied will be described.

### (3.1) Operation Example 1

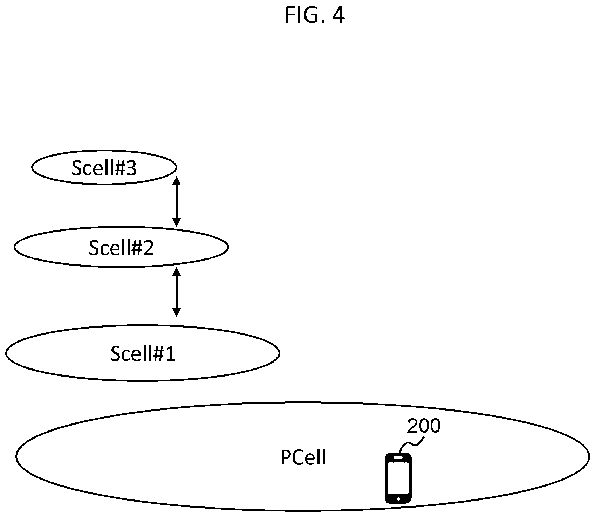

Fig. 4 shows a configuration example of a primary cell and a secondary cell. In an existing SCell change, SCell addition and SCell release are transmitted by RRC signaling from a gNB to a UE based on a measurement report from the UE. That is, the UE cannot autonomously change the SCell.

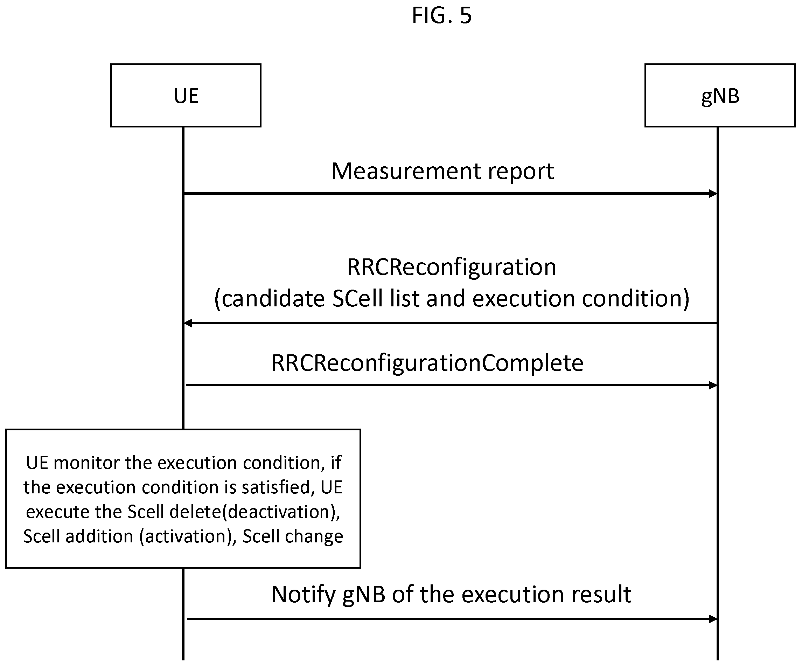

Fig. 5 shows a configuring sequence example of an SCell according to Operation Example 1. In this operation example, the gNB may configure a plurality of candidate SCell(s) in the UE in advance based on the measurement report from the UE.

The gNB may configure an execution condition for autonomously releasing or deactivating the SCell in the UE. The execution condition may be that quality of the SCell falls below a predetermined threshold.

The gNB may configure an execution condition for autonomously adding or activating the SCell in the UE. The execution condition may be that quality of the SCell exceeds a predetermined threshold.

The gNB may configure an execution condition for changing or adding the SCell in the UE. The execution condition may be that quality of a neighboring cell exceeds quality of the SCell by an offset.

Also, the UE may monitor the above-described execution condition, and when the execution condition is satisfied, the UE may execute autonomous release (deactivation), addition (activation), or change of the SCell.

The UE may maintain a candidate SCell list and an execution condition for further SCell release (deactivation), SCell addition (activation), and SCell change.

When the UE receives RRC signaling for a change of the candidate SCell list or for a change from the gNB, the UE can change or release the listed candidate SCell.

According to this operation example, the gNB can configure a plurality of candidate SCell(s) in the UE in advance based on the measurement report from the UE, and configure an execution condition for autonomously releasing or deactivating the SCell in the UE. For this reason, even when NES is applied, the UE can autonomously execute appropriate addition, change, or release of the SCell. Thereby, even when NES is introduced, appropriate cell change and the like can be realized.

### (3.2) Operation Example 2

When the SCell is an NES cell, when an NES mode of the SCell is activated, it is desirable that a normal UE under the cell transitions to another normal SCell. However, in the existing 3GPP specification, it is necessary to execute a procedure of releasing the NES mode SCell and adding another normal SCell by RRC signaling from the gNB. That is, the UE cannot autonomously change the NES SCell to another normal SCell.

Note that the NES mode may mean achieving an energy reduction effect by transitioning the cell to a sleep state or a cell DTX/DRX state, changing to an SSB-less cell, changing to a cell that does not broadcast an SIB (system information), or the like.

Also, when a Primary SCell (PSCell) in dual connectivity is an NES cell, when the NES mode of the PSCell is activated, it is desirable that a normal UE under the cell changes (transitions) to another normal PSCell. At this time, conditional PSCell addition change (CPAC) can be executed, but a specific method considering that it is an NES Cell has not been developed.

### (3.2.1) Operation Example 2-1

When the UE receives L1 group signaling transitioning to the NES mode (for example, Cell DTX/DRX) in the SCell, the UE may autonomously release (or may deactivate) the SCell.

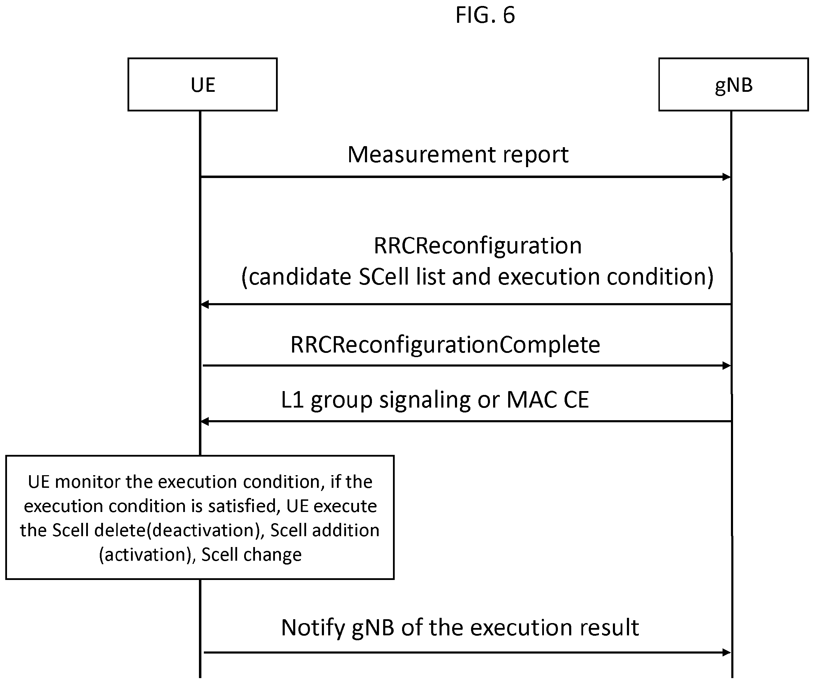

Fig. 6 shows a configuring sequence example of an SCell according to Operation Example 2. As shown in Fig. 6, when the UE receives L1 group signaling transitioning to the NES mode (for example, Cell DTX/DRX) in the SCell, the UE may start monitoring an execution condition of SCell delete (deactivation) and SCell change, similarly to Operation Example 1. When the execution condition is satisfied, the UE may execute SCell delete (deactivation)/SCell change.

When the UE receives L1 group signaling transitioning to the NES mode (for example, Cell DTX/DRX) in the SCell, and satisfies an execution condition of SCell delete (deactivation) and SCell change similar to Operation Example 1, the UE may execute SCell delete (deactivation)/SCell change.

As other than L1 group signaling transitioning to the NES mode (for example, Cell DTX/DRX) in the SCell, a MAC CE indicating NES mode activation may be used, or RRC signaling may be used.

### (3.2.2) Operation Example 2-2

The execution condition of CPAC may include a hysteresis specific to NES, an offset specific to NES, or timeToTrigger specific to NES. The offset specific to NES may be for each cell or for each measObject/frequency.

Note that the execution condition of CPAC may mean condEventA3, condEventA4, and condEventA5 (see 3GPP TS38.331) which are conditional events.

For example, when a source PSCell is an NES cell, PSCell change may be facilitated by configuring a low NES offset value. Alternatively, when a candidate target cell is an NES cell, PSCell change may be made more difficult than other normal candidate cells by configuring a high NES offset value.

As the execution condition of CPAC, a normal execution condition and an NES execution condition may be pre-configured by RRC. As a default (unless otherwise instructed by the gNB), the normal execution condition may be used.

Alternatively, as a default, the NES execution condition may be used. Alternatively, an instruction to switch from the normal execution condition to the NES execution condition may be transmitted from the source gNB/PSCell to the UE by L1 group signaling, L1 signaling, or a MAC CE.

The UE that has received the instruction may apply parameters of the NES execution condition (for example, hysteresis, offset, timeToTrigger for NES) and monitor the execution condition.

When the UE receives L1 group signaling or a MAC CE (for example, an NES mode activation trigger is included) from the source PSCell, and satisfies an execution condition (for example, neighbor cell's quality becomes better than serving cell's quality), the UE may trigger CPAC.

Also, the UE may start monitoring the execution condition in response to receiving L1 group signaling or a MAC CE from the source PSCell.

According to this operation example, the UE autonomously executes release of the SCell and the like based on signaling from the network and the like. For this reason, even when NES is applied, the UE can autonomously execute appropriate addition, change, or release of the SCell. Thereby, even when NES is introduced, appropriate cell change and the like can be realized.

### (3.3) Operation Example 3

In the existing 3GPP specification, when the UE autonomously adds/changes an SCell, the UE determines necessity of addition/change based only on reception quality of the cell. That is, the UE cannot autonomously add/change the SCell in consideration of factors such as a congestion degree of the SCell and an NES cell.

Also, when executing CHO, CPAC, or LTM, the UE determines necessity of execution of cell transition by monitoring only quality of a candidate target cell. The UE cannot execute CHO, CPAC, or LTM in consideration of factors such as a congestion degree of the candidate target cell and an NES cell.

### (3.3.1) Operation Example 3-1

When configuring a candidate SCell, the gNB may apply a weight or a priority (weight/priority) of the SCell for each SCell. The weight/priority may take into consideration a congestion degree of a cell, an NES cell, a URLLC (Ultra-Reliable and Low Latency Communications) function, or a redCap (Reduced UE Capability) function.

For example, when SCell #1 (see Fig. 4) is congested, the weight/priority may be set to "1". When the congestion degree of SCell #2 is low, the weight/priority may be set to "2".

Here, when both SCell #1 and SCell #2 satisfy a quality condition, access may be prioritized to SCell #2. Alternatively, the congestion degree for each SCell may be directly indicated. For example, it may be indicated as SCell #1: 70, SCell #2: 30 (100 may mean full capacity). The congestion degree may be a future congestion degree predicted by an artificial intelligence/machine learning model (AI/ML Model).

Also, when the UE is a normal UE and SCell #1 is an NES cell, the weight/priority may be set to "1". SCell #2 may be a normal cell, and the weight/priority may be set to "2". In this case, when both SCell #1 and SCell #2 satisfy a quality condition, access may be prioritized to SCell #2. Also, it may be directly indicated that the SCell is an NES cell or a non NES cell. An NES cell indication may be a predicted value that the cell will transition to an NES mode at a specific time in the future predicted by AI/ML.

Similarly to the NES cell described above, the weight/priority may be determined depending on whether or not the SCell supports URLLC, RedCap, or the like according to UE capability. Specifically, when the UE has URLLC capability and SCell #1 does not support the URLLC function, the weight/priority may be set to "1". When SCell #2 supports the URLLC function, the weight/priority may be set to "2". In this case, when SCell #1 and SCell #2 satisfy a quality condition at the same time, access may be prioritized to SCell #2.

Note that the UE may preferentially access a cell with a high weight/priority (the same applies hereinafter).

### (3.3.2) Operation Example 3-2

In the case of CHO, CPC, or LTM, when the gNB configures a candidate target cell, a weight/priority may be given to the candidate target cell for each candidate target cell.

The weight/priority may take into consideration a factor of a congestion degree or an NES cell.

For example, when candidate target cell #1 is congested, the weight/priority may be set to "1". When the congestion degree of candidate target cell #2 is low, the weight/priority may be set to "2".

In this case, when both candidate target cell #1 and candidate target cell #2 satisfy a quality condition, access may be prioritized to candidate target cell #2. Alternatively, the congestion degree may be directly indicated for each candidate target cell. For example, it may be indicated as Candidate target cell #1: 70, candidate target cell #2: 30 (100 may mean full capacity). The congestion degree may be a future congestion degree predicted by AI/ML. The UE may preferentially access a free cell.

Also, when candidate target cell #1 is an NES cell, the weight/priority may be set to "1". When candidate target cell #2 is a normal cell, the weight/priority may be set to "2".

In this case, when both candidate target cell #1 and candidate target cell #2 satisfy a quality condition, access may be prioritized to candidate target cell #2. Also, it may be directly indicated that the SCell is an NES cell or a non NES cell. An NES cell indication may be a predicted value that the cell will transition to an NES mode at a specific time in the future predicted by AI/ML. The UE may preferentially access a non-NES cell.

Similarly to the NES cell described above, the weight/priority may be determined depending on whether or not the SCell supports URLLC, RedCap, or the like according to UE capability. Specifically, when the UE has URLLC capability and candidate target cell #1 does not support the URLLC function, the weight/priority may be set to "1". When candidate target cell #2 supports the URLLC function, the weight/priority may be set to "2". In this case, when candidate target cell #1 and candidate target cell #2 satisfy a quality condition at the same time, access may be prioritized to candidate target cell #2.

According to this operation example, a weight or a priority (weight/priority) is applied to an SCell or a candidate target cell based on a factor such as a congestion degree or an NES cell. For this reason, even when NES is applied, the UE can autonomously execute appropriate addition, change, or release of the SCell. Thereby, even when NES is introduced, appropriate cell change and the like can be realized.

### (4) Other Embodiments

Although the contents of the present proposal have been described above in accordance with the embodiments, the present proposal is not limited to the description of these embodiments, and it is obvious to those skilled in the art that various modifications and improvements are possible.

Although the embodiments have been described above, the present proposal is not limited to the description of the embodiments, and it is obvious to those skilled in the art that various modifications and improvements are possible.

For example, in the above-described embodiments, the name of NES was used, but another name having the same meaning may be used for the technology for reducing energy consumption of a network as described above.

Also, in the above description, "configure", "activate", "update", "indicate", "enable", "specify", and "select" may be read interchangeably. Similarly, "link", "associate", "correspond", and "map" may be read interchangeably, and "allocate", "assign", "monitor", and "map" may also be read interchangeably.

Furthermore, "specific", "dedicated", "UE-specific", and "UE-dedicated" may be read interchangeably. Similarly, "common", "shared", "group-common", "UE-common", and "UE-shared" may be read interchangeably.

In the present disclosure, terms such as "precoding", "precoder", "weight (precoding weight)", "Quasi-Co-Location (QCL)", "Transmission Configuration Indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

Also, the block configuration diagram (Fig. 3) used for the description of the above-described embodiments shows blocks of functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

Furthermore, the above-described gNB 100 and UE 200 (the apparatus) may function as a computer that performs processing of the radio communication method of the present disclosure. Fig. 7 is a diagram showing an example of a hardware configuration of the apparatus. As shown in Fig. 7, the apparatus may be configured as a computer device including a processor 1001, a memory 1002, a storage 1003, a communication device 1004, an input device 1005, an output device 1006, a bus 1007, and the like.

Note that in the following description, the term "apparatus" can be read as a circuit, a device, a unit, or the like. The hardware configuration of the apparatus may be configured to include one or a plurality of each device shown in the figure, or may be configured without including some devices.

Each functional block of the apparatus (see Fig. 3) is realized by any hardware element of the computer device or a combination of the hardware elements.

Also, each function in the apparatus is realized by reading predetermined software (program) on hardware such as the processor 1001 and the memory 1002, thereby causing the processor 1001 to perform calculation, and controlling communication by the communication device 1004, and controlling at least one of reading and writing of data in the memory 1002 and the storage 1003.

The processor 1001, for example, operates an operating system to control the entire computer. The processor 1001 may be configured by a central processing unit (CPU) including an interface with peripheral devices, a control device, an arithmetic device, a register, and the like.

Further, the processor 1001 reads a program (program code), a software module, data, and the like from at least one of the storage 1003 and the communication device 1004 to the memory 1002, and executes various processing according to these. As the program, a program that causes a computer to execute at least a part of the operations described in the above-described embodiments is used. Furthermore, the various processing described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, and the like executable to perform the method according to an embodiment of the present disclosure.

The storage 1003 is a computer-readable recording medium, and may be configured by at least one of, for example, an optical disk such as a Compact Disc ROM (CD-ROM), a hard disk drive, a flexible disk, a magneto-optical disk (for example, a compact disk, a digital versatile disk, a Bluray (registered trademark) disk), a smart card, a flash memory (for example, a card, a stick, a key drive), a floppy (registered trademark) disk, a magnetic strip, and the like. The storage 1003 may be referred to as an auxiliary storage device. The above-described recording medium may be, for example, a database, a server, or other appropriate media including at least one of the memory 1002 and the storage 1003.

The communication device 1004 is hardware (transmission/reception device) for performing communication between computers via at least one of a wired network and a wireless network, and is also referred to as, for example, a network device, a network controller, a network card, a communication module, or the like.

The communication device 1004 may be configured to include a high frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that implements output to the outside. Note that the input device 1005 and the output device 1006 may have an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Furthermore, the apparatus may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardware.

Further, notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

Each aspect/embodiment described in the present disclosure may be applied to at least one of a system utilizing Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system extended based on these. Also, a plurality of systems may be combined (for example, a combination of at least one of LTE and LTE-A and 5G) and applied.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The specific operation performed by the base station in the present disclosure may be performed by an upper node thereof in some cases. In a network including one or a plurality of network nodes having a base station, it is obvious that various operations performed for communication with a terminal can be performed by at least one of the base station and other network nodes other than the base station (for example, MME or S-GW may be considered, but not limited thereto). Although the case where there is one other network node other than the base station has been illustrated above, it may be a combination of a plurality of other network nodes (for example, MME and S-GW).

Information, signals (information and the like) can be output from an upper layer (or lower layer) to a lower layer (or upper layer). It may be input and output via a plurality of network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

The terms "system" and "network" used in the present disclosure are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality (for example, three) of cells (also called sectors). When a base station accommodates a plurality of cells, the entire coverage area of the base station can be divided into a plurality of smaller areas, and each smaller area can also provide communication services by a base station subsystem (for example, a compact base station for indoor use (Remote Radio Head: RRH)).

The term "cell" or "sector" refers to a part or the whole of the coverage area of at least one of the base station and the base station subsystem that performs communication services in this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably..

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of the base station and the mobile station may be referred to as a transmission apparatus, a reception apparatus, a communication apparatus, or the like. Note that at least one of the base station and the mobile station may be a device mounted on a moving body, the moving body itself, or the like. The moving body refers to an object that can move, and a moving speed is arbitrary. It also naturally includes a case where the moving body is stopped. The moving body includes, for example, a vehicle, a transport vehicle, an automobile, a motorcycle, a bicycle, a connected car, an excavator, a bulldozer, a wheel loader, a dump truck, a forklift, a train, a bus, a cart, a rickshaw, a ship and other watercraft, an airplane, a rocket, a satellite, a drone (registered trademark), a multicopter, a quadcopter, a balloon, and objects mounted on these, but is not limited thereto. Also, the moving body may be a moving body that travels autonomously based on an operation command. It may be a vehicle (for example, a car, an airplane, etc.), a moving body that moves unmanned (for example, a drone, a self-driving car, etc.), or a robot (manned or unmanned). Note that at least one of the base station and the mobile station includes an apparatus that does not necessarily move during communication operation. For example, at least one of the base station and the mobile station may be an IoT (Internet of Things) device such as a sensor.

Also, the base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, may be referred to as Device-to-Device (D2D), Vehicle-to-Everything (V2X), etc.). In this case, the mobile station may have the functions of the base station. Also, words such as "uplink" and "downlink" may be replaced with words corresponding to inter-terminal communication (for example, "side"). For example, an uplink channel, a downlink channel, and the like may be replaced with a side channel (or sidelink).

Similarly, the mobile station in the present disclosure may be read as a base station. In this case, the base station may have the functions of the mobile station.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be configured by one or a plurality of symbols (Orthogonal Frequency Division Multiplexing (OFDM) symbols, Single Carrier Frequency Division Multiple Access (SC-FDMA) symbols, etc.) in the time domain. The slot may be a time unit based on numerology.

A slot may include a plurality of mini slots. Each mini slot may be configured by one or a plurality of symbols in the time domain. Also, the mini slot may be referred to as a sub-slot. The mini slot may be configured by a smaller number of symbols than the slot. A PDSCH (or PUSCH) transmitted in a time unit larger than the mini slot may be referred to as PDSCH (or PUSCH) mapping type A. A PDSCH (or PUSCH) transmitted using the mini slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a Transmission Time Interval (TTI), a plurality of consecutive subframes may be referred to as a TTI, or one slot or one mini slot may be referred to as a TTI. That is, at least one of the subframe and the TTI may be a subframe (1 ms) in existing LTE, may be a period shorter than 1 ms (for example, 1 to 13 symbols), or may be a period longer than 1 ms. Note that the unit representing the TTI may be referred to as a slot, a mini slot, or the like instead of the subframe.

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain.

The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," a "pilot signal," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

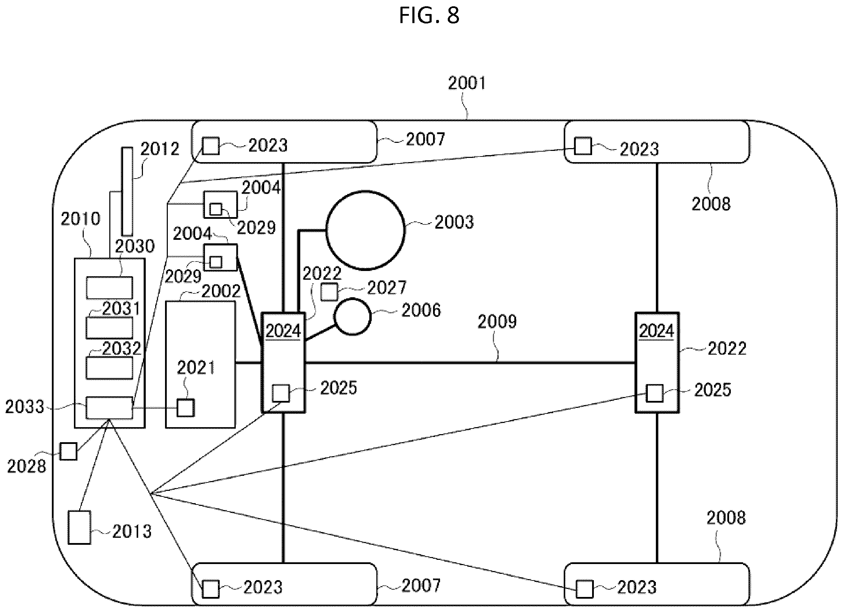

Fig. 8 shows a configuration example of a vehicle 2001. As shown in Fig. 8, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is configured by, for example, an engine, a motor, or a hybrid of an engine and a motor.

The steering unit 2003 includes at least a steering wheel (also referred to as a handle), and is configured to steer at least one of the front wheels and the rear wheels based on an operation of the steering wheel operated by a user.

The electronic control unit 2010 is configured by a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be referred to as an ECU (Electronic Control Unit).

Signals from the various sensors 2021 to 2028 include a current signal from the current sensor 2021 that senses a current of the motor, a rotation speed signal of the front wheels or the rear wheels acquired by the rotation speed sensor 2022, an air pressure signal of the front wheels or the rear wheels acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, a detection signal for detecting an obstacle, a vehicle, a pedestrian, and the like acquired by the object detection sensor 2028, and the like.

The information service unit 2012 is configured by various devices for providing (outputting) various information such as driving information, traffic information, and entertainment information, such as a car navigation system, an audio system, a speaker, a television, and a radio, and one or more ECUs that control these devices. The information service unit 2012 provides various multimedia information and multimedia services to occupants of the vehicle 2001 using information acquired from an external device via the communication module 2013 or the like.

The information service unit 2012 may include an input device (for example, a keyboard, a mouse, a microphone, a switch, a button, a sensor, a touch panel, etc.) that accepts input from the outside, or may include an output device (for example, a display, a speaker, an LED lamp, a touch panel, etc.) that implements output to the outside.

The driver assistance system unit 2030 is configured by various devices for providing functions for preventing accidents in advance and reducing a driving load of a driver, such as a millimeter wave radar, LiDAR (Light Detection and Ranging), a camera, a positioning locator (for example, GNSS, etc.), map information (for example, a high definition (HD) map, an autonomous vehicle (AV) map, etc.), a gyro system (for example, IMU (Inertial Measurement Unit), INS (Inertial Navigation System), etc.), an AI (Artificial Intelligence) chip, and an AI processor, and one or more ECUs that control these devices. Also, the driver assistance system unit 2030 transmits and receives various information via the communication module 2013, and realizes a driver assistance function or an autonomous driving function.

The communication module 2013 can communicate with the microprocessor 2031 and components of the vehicle 2001 via a communication port. For example, the communication module 2013 transmits and receives data via the communication port 2033 to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device controllable by the microprocessor 2031 of the electronic control unit 2010 and capable of communicating with an external device. For example, it transmits and receives various information to and from an external device via radio communication. The communication module 2013 may be inside or outside the electronic control unit 2010. The external device may be, for example, a base station, a mobile station, or the like.

The communication module 2013 may transmit at least one of signals from the various sensors 2021 to 2028 input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that accepts input. For example, a PUSCH transmitted by the communication module 2013 may include information based on the input.

The communication module 2013 receives various information (traffic information, signal information, inter-vehicle information, etc.) transmitted from an external device, and displays it on the information service unit 2012 provided in the vehicle. The information service unit 2012 may be referred to as an output unit that outputs information (for example, outputs information to a device such as a display or a speaker based on a PDSCH (or data/information decoded from the PDSCH) received by the communication module 2013). Also, the communication module 2013 stores various information received from an external device in the memory 2032 usable by the microprocessor 2031. Based on the information stored in the memory 2032, the microprocessor 2031 may perform control of the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

### (Supplementary Note)

The above-described disclosure may be expressed as follows. A first feature is a radio base station including: a reception unit that receives a measurement report from a terminal; and a control unit that configures, to the terminal, candidates for a plurality of secondary cells autonomously selectable by the terminal based on the measurement report.

A second feature is the radio base station according to the first feature, wherein the control unit configures an execution condition for adding, releasing, or changing the secondary cell.

A third feature is a terminal including: a reception unit that receives signaling of a lower layer indicating that a secondary cell shifts to a dormant state associated with reduction of energy consumption; and a control unit that releases or deactivates the secondary cell when receiving the signaling.

A fourth feature is the terminal according to the third feature, wherein when receiving the signaling, the control unit starts monitoring an execution condition for release or change of the secondary cell.

A fifth feature is a radio base station including: a communication unit that executes radio communication with a terminal via a secondary cell; and a control unit that configures a priority for the secondary cell when configuring a candidate for the secondary cell, wherein the control unit configures the priority based on at least one of an energy consumption cost of the secondary cell, required communication quality, and a capability of the terminal.

A sixth feature is the radio base station according to the fifth feature, wherein the control unit sets the priority for each candidate for the secondary cell when at least one of conditional handover, conditional cell change, and mobility control by a lower layer is applied.

A seventh feature is the radio base station according to the fifth or sixth feature, wherein the control unit configures the priority based on at least one of a congestion degree and presence/absence of a dormant state of the secondary cell.

### DESCRIPTION OF REFERENCE NUMERALS

10 Radio communication system
20 NG-RAN
100 gNB
200 UE
210 Radio signal transmission/reception unit
220 Amplifier unit
230 Modulation/demodulation unit
240 Control signal/reference signal processing unit
250 Encoding/decoding unit
260 Data transmission/reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driver assistance system unit
2031 Microprocessor
2032 Memory (ROM, RAM)
2033 Communication port

## Claims

1. A radio base station comprising:
a communication unit that executes radio communication with a terminal via a secondary cell; and
a control unit that configures a priority for the secondary cell when configuring a candidate for the secondary cell, wherein
the control unit configures the priority based on at least one of an energy consumption cost of the secondary cell, required communication quality, and a capability of the terminal.

2. The radio base station according to claim 1, wherein the control unit configures the priority for each candidate for the secondary cell when at least one of conditional handover, conditional cell change, and mobility control by a lower layer is applied.

3. The radio base station according to claim 1, wherein the control unit configures the priority based on at least one of a congestion degree and presence/absence of a dormant state of the secondary cell.
